# FASCICULE DE BREVET EUROPEEN

(11) **EP 1 043 795 B1**
(45) Date de publication et mention de la délivrance du brevet: **09.02.2011**
(21) Numéro de dépôt: 00420068.9
(22) Date de dépôt: 06.04.2000
(51) Int. Cl.: H01M 10/0565, H01M 10/052

(54) **Générateur électrochimique à électrode composite comprenant deux électrolytes solides différents et procédé de fabrication**
Elektrochemischer Stromgenerator mit zwei verschiedene Festelektrolyten enthaltende Verbundelektrode und Verfahren zur Herstellung
Electrochemical generator with composite electrode comprising two different solid electrolytes and process of manufacture

(30) Priorité: 07.04.1999 CA 2268346
(43) Date de publication de la demande: 11.10.2000
(73) Titulaire: Bathium Canada Inc., Boucherville, QC J4B 7Z7 (CA); MINNESOTA MINING AND MANUFACTURING COMPANY, St. Paul, MN 55133-3427 (US)
(72) Inventeur: Gauthier, Michel, La Prairie, Québec J5R 1E6 (CA); Besner, Simon, Coteau-du-Lac, Québec JOP 1B0 (CA); Armand, Michel, Montréal, Québec H3T 1N2 (CA); Magnan, Jean-Francois, Neuville, Québec G0A 2R0 (CA); Hovington, Pierre, Boucherville, Quebéc J4B 2L4 (CA)
(74) Mandataire: Guerre, Dominique

(56) Documents cités:
- EP-A- 1 043 787
- EP-A- 1 043 790
- WO-A-98/32183
- US-A- 5 449 576
- US-A- 5 705 291
- US-A- 5 856 045

## Description

### DOMAINE DE L'INVENTION

La présente invention concerne un générateur électrochimique au lithium comportant au moins une électrode composite comprenant un matériau actif et un premier et un second électrolyte solides distribués de façon non-homogène dans le composite. Le premier électrolyte solide est de nature minérale, vitreux ou partiellement vitreux, et est un conducteur spécifique des ions lithium, et est localisé préférentiellement en surface des particules du matériau actif de l'électrode. Le second électrolyte solide est de nature organique, comprend un électrolyte polymère sec ou gélifié conducteur mixte des ions répartis autour des phases solides dispersées et agissant comme liant déformable du composite en contact également avec le collecteur et l'électrolyte séparateur du générateur. Une mince couche du premier électrolyte mouille et recouvre au moins une partie de la surface des particules du matériau actif de façon à protéger la surface recouverte des réactions de passivation ou de dégradation induites par le second électrolyte et à maintenir la qualité des échanges ioniques et électroniques entre la matière active de l'électrode et les autres constituants du composite, le premier électrolyte étant imperméable aux composantes du second électrolyte.

### ART ANTÉRIEUR

Les électrolytes polymères sont particulièrement désirables pour la fabrication d'accumulateurs au lithium utilisant des électrodes composites dans lesquelles les matériaux d'électrodes sont dispersés dans la matrice polymère, qui agit alors comme conducteur d'ions et comme liant déformable des poudres de matière active. Avec de tels électrolytes, il est possible de contrôler l'élastoméricité et l'adhésion du liant électrolyte en contact avec les solides. Ces systèmes permettent donc d'absorber sans dommage les variations volumiques des matériaux d'électrode.

Les électrodes composite à base d'électrolyte polymères peuvent être de 2 types, soit de type solvatant sec fonctionnant à chaud, généralement avec des anodes de lithium; ou soit de type gélifiés, solvatant ou non, fonctionnant à la température ambiante grâce à l'addition de solvants liquides aprotiques polaires en association avec des électrodes de type lithium-ion dont les cathodes fonctionnent à des tensions élevées (~ 4V). Cependant, quelque soit leur type, de telles électrodes composites ont tendance à vieillir au cyclage et/ou en fonction du temps. Ce vieillissement produit des réactions chimiques ou électrochimiques indésirables localisées à la surface des grains de matière active, à la surface des collecteurs, et dans certains cas, à la surface de l'additif de conduction électronique. Ce phénomène, par ailleurs générique aux générateurs au lithium à électrolytes organiques, entraîne ainsi la formation de films de passivation ou de dégradation sur les surfaces où se produisent les échanges ioniques et électroniques. L'efficacité des générateurs est donc grandement diminuée.

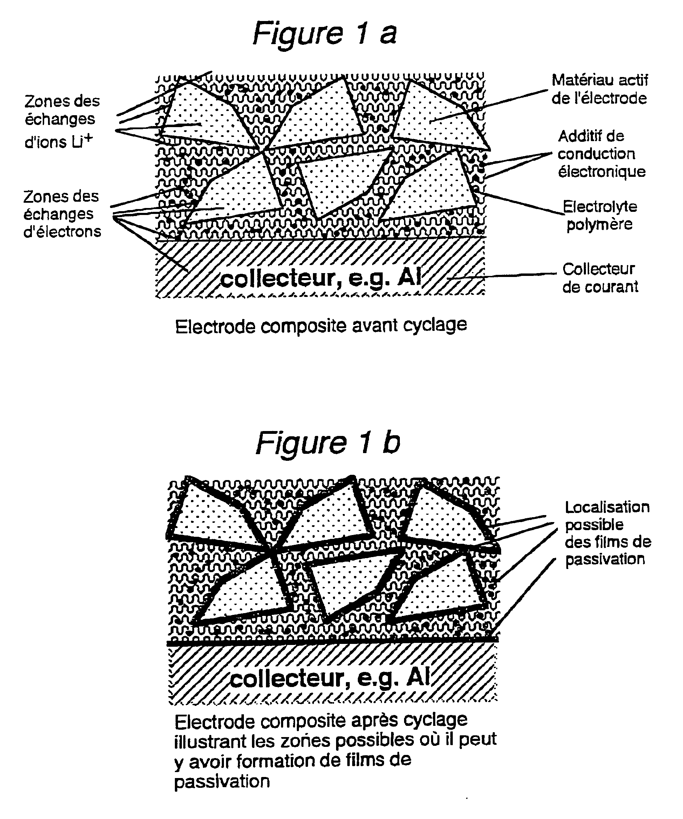

En milieux polymères, ces phénomènes sont amplifiés parce qu'à l'état solide, les produits formés par la réaction du solvant, du sel et du matériau d'électrode tendent à s'accumuler par manque de convection, et ne sont pas compensés par le pouvoir pénétrant des électrolytes liquides qui peuvent maintenir les échanges aux interfaces par leur pouvoir de pénétration à travers des films de passivation ou de dégradation. Les phénomènes observés sont des décompositions électrochimiques initiées par des radicaux, des réactions acide-base, ou encore des réactions d'oxydation-réduction plus ou moins catalysées par les matériaux en présence. Les Figures 1a) et 1b) illustrent la localisation possible des films de passivation sur les différentes interfaces où ont lieu les échanges ioniques et électroniques.

Il est donc fréquent en milieu solide organique de voir une augmentation des résistances de transfert aux interfaces, en plus des phénomènes de limitation de diffusion des ions aux électrodes. Les films formés aux interfaces sont parfois détectables en microscopie électronique et peuvent atteindre quelques centaines de nanomètres. Dans d'autres cas, les réactions de dégradation causent des bris de la structure cristalline en surface des phases actives, ou entraînent la formation d'espèces solubles nuisibles au bon fonctionnement du générateur.

Les réactions entre des solides cristallins ou vitreux, par exemple entre un oxyde ou chalcogénure de cathode et un électrolyte vitreux, sont en général plus lentes, et ces systèmes sont reconnus pour leur stabilité en fonction du temps, de la température et de la tension de fonctionnement. Le désavantage des électrolytes solides minéraux cristallins ou vitreux est cependant leur rigidité et leur fragilité, ce qui fait qu'ils ne résistent pas aux variations de volume des électrodes causées par le cyclage.

Le brevet US5,449,576 (Anani et al.) propose comme solution un électrolyte multicouche constitué d'un électrolyte primaire et d'un électrolyte secondaire situé entre l'électrolyte primaire et chacune des électrodes de la cellule électrochimique. L'électrolyte secondaire est sélectionné selon sa capacité à résister au potentiel maximum de l'électrode. L'électrolyte secondaire protège ainsi l'électrolyte primaire et empêche les réactions chimiques entre l'électrolyte primaire et l'électrode qui peuvent menées à la formation de couches isolantes ioniques à la surface des électrodes.

Le brevet US5,856,045 (Fauteux et al.) propose une solution similaire, mais décrit plutôt une cellule électrochimique comprenant une couche protectrice positionnée entre l'électrode et l'électrolyte. Cette couche protectrice comprend un matériau actif et un liant inorganique, de préférence un polysilicate de lithium qui est soluble avec le matériau actif de l'électrode et insoluble avec l'électrolyte de sorte que l'électrode est protégée d'une dégradation prématurée causée par le contact direct de l'électrolyte.

Le brevet US5,705,291 (Amatucci et al.) quant à lui propose une cellule électrochimique comprenant un matériau cathodique dont les particules de LiMn2O4 sont enduites d'une couche de Borate ou de Borate lithié afin de limiter les contacts entre les particules LiMn204 et l'électrolyte liquide de la cellule électrochimique. Par contre, la cellule électrochimique décrite comprend un électrolyte de type liquide pour lesquels les problèmes de passivation et de dégradation tels qu'énoncés précédemment ne sont pas importants.

### SOMMAIRE DE L'INVENTION

La présente invention concerne un générateur électrochimique, préférablement un générateur électrochimique au lithium, comportant une cathode et une anode dont au moins l'une d'elle est une électrode composite comprenant un matériau actif, préférablement sous forme de particules dispersées, un collecteur de courant, et au moins un premier et un second électrolyte solide préférablement distribués de façon non-homogène dans le composite, le premier et le second électrolyte comprenant optionnellement un ou plusieurs additif de conduction électronique sous forme dispersée. Le premier électrolyte comprend un conducteur solide de nature minérale, vitreux ou partiellement vitreux, localisé préférentiellement en surface des grains du matériau actif. Le second électrolyte comprend un solide de nature organique, comprenant préférentiellement un électrolyte polymère sec ou gélifié et conducteur mixte des ions répartis autour des phases solides dispersées et agissant comme liant déformable du composite en contact également avec le collecteur et l'électrolyte séparateur du générateur. Une mince couche du premier électrolyte mouille et recouvre au moins une partie de la surface des particules du matériau actif de façon à protéger la surface recouverte des particules des réactions de passivation ou de dégradation et à maintenir la qualité des échanges ioniques et électroniques entre la matière active de l'électrode et les autres constituants du composite. De plus, le premier électrolyte est imperméable aux composantes du second électrolyte, ce dernier étant réparti dans au moins une partie du composite de façon à assurer la conductivité des ions ainsi qu'un rôle de liant déformable, préférablement élastomérique, entre les composantes de l'électrode composite ainsi qu'avec le collecteur de courant et avec le séparateur électrolyte du générateur.

Dans un second aspect de l'invention, il est décrit une électrode composite comprenant un matériau actif, un collecteur de courant, un premier électrolyte solide minéral et un second électrolyte organique, le premier et le second électrolyte comprenant optionnellement un ou plusieurs additifs de conduction électronique sous forme dispersée; le second électrolyte étant en contact avec le collecteur et agissant comme liant déformable du composite; dans lequel le premier électrolyte mouille et recouvre au moins une partie de la surface des particules du matériau actif de façon à en protéger la surface des réactions de passivation ou de dégradation et à maintenir la qualité des échanges ioniques et électroniques entre le matériau actif et les autres constituants du composite, le premier électrolyte étant imperméable aux composantes du second électrolyte.

Finalement, dans un troisième aspect de l'invention, il est décrit un procédé de fabrication d'une électrode selon la présente invention, comprenant:
a) le mélange de particules de matériau actif d'électrode dans une solution aqueuse du premier électrolyte minéral comprenant optionnellement un additif de conduction;
b) le séchage de la solution de l'étape a) pour obtenir une poudre de particule de matériau actif partiellement ou totalement recouverte du premier électrolyte minéral;
c) le mélange de la poudre obtenue en b) avec un second électrolyte organique comprenant optionnellement un additif de conduction; et
d) l'enduction d'un collecteur de courant par le mélange obtenu en c).

Dans une mise en oeuvre préférentielle, le premier électrolyte est un conducteur d'ions lithium. Dans une autre mise en oeuvre préférentielle, le premier électrolyte est vitreux ou partiellement vitreux, et est conducteurs des ions alcalins lithium et potassium. Dans une autre mise en oeuvre préférentielle, le premier électrolyte comprend majoritairement du polyphosphate de lithium de formule approximative (LiPO₃)ₙ dans laquelle n > 3, et possède une conductivité ionique minimale de 10⁻¹⁰ S/cm à la température d'opération.

Dans une autre mise en oeuvre préférentielle, l'additif de conduction comprend le noir de carbone, les graphites, les métaux comme l'argent et le cuivre, et les composés semi-métalliques comme les carbures, les borures, et les silicures sous formes dispersées, et leurs mélanges.

Dans une autre mise en oeuvre préférentielle, le second électrolyte comprend:
- un polymère solvatant sec ou gélifié par un solvant aprotique polaire rendu conducteur par l'addition d'un sel de lithium soluble ou un polyélectrolyte; ou
- un gel comprenant un polymère peu solvatant, d'un solvant liquide aprotique polaire et d'un sel de lithium dissous.
Le polymère solvatant peut comprendre, par exemple, un électrolyte polymère comprenant un sel de lithium et un homopolymère, un copolymère, une structure peigne, ou un réseau réticulé ou interpénétré d'un polyéther. De façon préférentielle, l'électrolyte polymère adhère aux particules du matériau actif.

Dans une autre mise en oeuvre préférentielle, le matériau actif est utilisé comme anode et comprend les oxydes, les nitrures, le carbone, les graphites ou leurs mélanges fonctionnant à un potentiel inférieur à 1.6 Volts par rapport à une électrode de lithium métallique.

Dans une autre mise en oeuvre préférentielle, l'anode comprend du lithium, un alliage de lithium, un composé d'insertion du carbone ou du graphite.

### DANS LES DESSINS

La Figure 1a illustre une électrode composite avant cyclage;
La Figure 1b illustre la formation de couches de passivation sur une électrode composite après cyclage;
La Figure 2a illustre un exemple d'électrode composite selon la présente invention avant cyclage;
La Figure 2b illustre la formation de couches de passivation sur une électrode composite selon la présente invention après cyclage;
La Figure 3a illustre une électrode composite selon la présente invention contenant des agglomérés de particules actives avant cyclage;
La Figure 3b illustre la formation de couches de passivation sur l'électrode de la Figure 3a après cyclage;
La Figure 4 illustre une micrographie d'une poudre LiCoO₂, de (LiPO₃)ₙ et de noir de carbone obtenue par pulvérisation- séchage; et
La Figure 5 illustre une micrographie d'une poudre LiV₃O₈, de (LiPO₃)ₙ et de noir de carbone.

### DESCRIPTION DÉTAILLÉE DE L'INVENTION

La présente invention porte sur l'optimisation des performances et de la stabilité chimique et électrochimique d'une électrode composite d'un générateur au lithium, l'électrode comportant un système à double électrolytes solides. Le premier électrolyte est un solide minéral, préférentiellement vitreux et conducteur des ions Li⁺, utilisé en couche mince pour mouiller et recouvrir au moins une partie du matériau actif de l'électrode de façon à stabiliser chimiquement la surface des particules dudit matériau et à maintenir la qualité des échanges ioniques et électroniques avec les autres constituants de l'électrode composite. Le second électrolyte est un électrolyte organique, préférentiellement un électrolyte polymère sec ou gélifié et déformable, dans lequel le composite est distribué, ce second électrolyte étant utilisé comme liant des particules du matériau actif de l'électrode en contact avec le premier électrolyte minéral. Un additif de conduction électronique peut être présent dans le premier électrolyte, dans le second électrolyte, ou dans les deux, pour faciliter le transport des ions et des électrons. Le premier électrolyte minéral solide utilisé selon la présente invention est choisi de façon à être compatible chimiquement avec le matériau actif de électrode, pour éviter que les autres composantes du générateur et/ou du second électrolyte organique y soient solubles. Si tel était le cas, cela provoquerait la formation de films de passivation ou de produits de dégradation à la surface du matériau actif de l'électrode.

La présente invention comporte en outre des moyens de mise en oeuvre des électrolytes solides vitreux, de l'électrode composite à double électrolytes solides ainsi que du générateur.

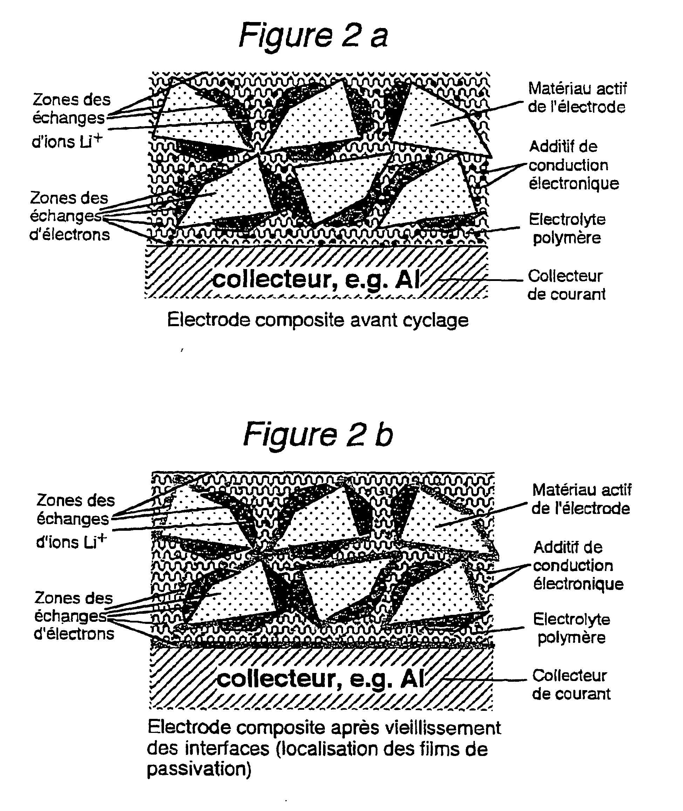

Par la combinaison à l'intérieur d'une même électrode des deux types d'électrolytes solides, qui sont distribués dans le composite et localisés dans des rôles complémentaires, la présente invention permet de contourner les limitations de l'art antérieur. Le premier électrolyte solide est préférentiellement vitreux et conducteur des ions Li⁺, et est utilisé à la surface du matériau actif de l'électrode, qu'il mouille au moins en partie et protège des composantes du second électrolyte, en l'occurrence le polymère, le sel de lithium ou tout autre produit en solution. Le fait que le premier électrolyte solide vitreux ne dissolve pas les composantes du second électrolyte organique permet de protéger les surfaces recouvertes, empêchant ainsi la formation de films de passivation qui sont nuisibles aux bons contacts électriques, et de dégradations indésirables qui réduisent aussi l'efficacité des contacts électriques. La couche du premier électrolyte vitreux appliquée sur le matériau actif est préférentiellement présente sous forme mince et contient, dans une mise en oeuvre préférée, un additif de conduction électronique dispersé afin de conférer un caractère de conducteur mixte au premier électrolyte vitreux, facilitant ainsi les échanges ioniques et électroniques dans la zone protégée. Les Figures 2a) et 2b) illustrent une telle mise en oeuvre, dans laquelle on retrouve un additif de conduction dans le premier électrolyte vitreux et dans le second électrolyte polymère organique. La façon dont le traitement des particules du matériau actif de l'électrode protège certaines zones de contact malgré le vieillissement du composite est illustrée en b) où les films de passivations sont montrés.

En outre, la présente invention comprend les électrolytes vitreux compatibles avec une large gamme de matériaux d'électrode, notamment avec des oxydes acides tels que les oxydes de vanadium V₂O₅, V₆O₁₃ et LiV₃O₈, qui sont autrement incompatibles avec des composés basiques tels que les silicates et polysilicates de métaux alcalins, parce qu'ils réagissent de façon irréversible avec l'oxyde de vanadium. Dans la présente invention, les phosphates, les polyphosphates, les borates et les polyborates de lithium ou de potassium, ainsi que leurs mélanges, représentent des matériaux d'électrode préférés. Divers additifs connus pour stabiliser la formation de verre peuvent également être ajoutés au premier électrolyte vitreux de l'invention dans la mesure où ils ne sont pas incompatibles avec les matériaux de l'électrode. De tels agents formateurs de verre incluent la silice partiellement ou totalement hydrolysée, les titanates, les aluminates, les siloxanes partiellement ou totalement hydrolysés, et leurs mélanges.

L'invention utilise d'autre part les propriétés plus conductrices des électrolytes polymères, gélifiés ou non, afin d'optimiser les performances en puissance de l'électrode composite dans la mesure où l'électrolyte polymère est distribué autour des particules de matériau actif de l'électrode et de l'additif de conduction électronique, le cas échéant, de façon à lier les particules ensembles et avec le collecteur de courant de l'électrode. Le second électrolyte polymère du composite, qui agit comme liant, permet également d'assurer l'adhésion et les échanges ioniques avec le séparateur électrolyte du générateur, préférentiellement un film à base d'électrolyte polymère.

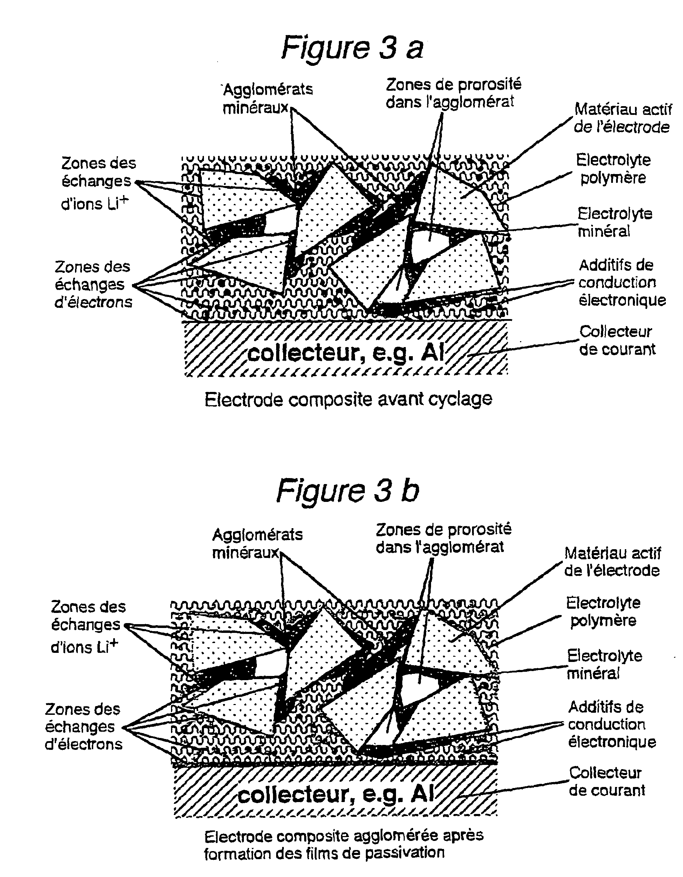

La présente invention utilise un procédé aqueux permettant de traiter le matériau actif de l'électrode sous forme dispersée avec le premier électrolyte vitreux en solution, optionnellement en présence d'un additif de conduction, lui aussi dispersé. La solution est alors soit filtrée et le résidu séché, ou traitée par pulvérisation-séchage ("spray dried") pour former des particules individuelles partiellement ou totalement mouillées par le premier électrolyte vitreux, ou des particules agglomérées comportant le matériau d'électrode, le verre adhérent et additif de conduction électronique, le cas échéant. Les particules ont ainsi un taux de porosité plus ou moins accessible au second électrolyte polymère lors de l'introduction de ce dernier. Les Figures 3a) et 3b) illustrent la formation d'agglomérats minéraux plus ou moins poreux et plus ou moins pénétrés par le second électrolyte polymère. Les particules agglomérées peuvent être partiellement ou totalement pénétrés par le second électrolyte, de façon à réduire la surface du matériau actif qui est mise en contact avec le second électrolyte.

Les procédés pour former des électrodes composites à partir d'électrolytes polymères sont connus et peuvent être adaptés pour les besoins de la présente invention. On utilisera par exemple l'application de solutions de polymère, l'application de polymères fondus ou l'application de pré-polymères ou monomères de basses masses moins visqueux qui seront réticulés/polymérisés après leur mise en forme en composite.

L'usage de compositions de verres utilisant du potassium est également incluse dans la présente invention dans la mesure où le potassium s'échange avec le lithium et n'interfère pas avec le fonctionnement du générateur au lithium.

Les exemples suivants sont fournis afin d'illustrer certains modes de réalisation préférentiels de l'invention, et ne devrait pas être interprétés comme en limitant la portée.

### Exemple 1

Une solution aqueuse de l'électrolyte solide minéral vitreux de formulation générale (LiPO₃)ₙ est préparée de la façon suivante. Une solution aqueuse de (LiPO₃)ₙ est préparée en dissolvant 75 g d'acide polymétaphosphorique ((HPO₃)ₙ) dans 325 g d'eau (cette solution peut également comprendre un alcool inférieur) et est par la suite en partie ou en totalité neutralisée par l'ajout d'hydroxyde de lithium monohydrate (LiOH•H₂O), dans un rapport molaire (HPO₃)ₙ/LiOH de 1, correspondant à l'ajout de 39.6 g de LiOH•H₂O.

### Exemple 2

Une dispersion constituée de 0.25 g de LiV₃O₈ est agité de façon rigoureuse avec 100 mL de la solution aqueuse de (LiPO₃)ₙ préparée selon l'exemple 1. La dispersion ainsi préparée montre une couleur brune typique de l'oxyde LiV₃O₈. Cette observation démontre la stabilité chimique de la solution aqueuse neutre de l'électrolyte solide de type (MPO₃)ₙ où M est Li ou K, avec des matériaux d'électrode acides représentés par LiV₃O₈. Une solution identique comportant un excès de base (LiOH) a pour conséquence de rendre la solution verdâtre. Une coloration verte est probablement associée à un état réduit de vanadium résultant d'une décomposition possible de l'eau en milieu basique. Une telle observation est également notée avec V₂O₅ lorsque traitée au silicate de sodium. La couleur verte résulte de l'effet basique des silicates de métaux alcalins et leur incompatibilité avec les oxydes à caractère acide comme V₂O₅. Une solution identique comportant un excès d'acide (LiPO₃)ₙ rend la solution orange, qui est possiblement associée à formation de V₂O₅ suite à la formation probable d'un acide d'anion vanadyle en milieu acide.

### Exemple 3

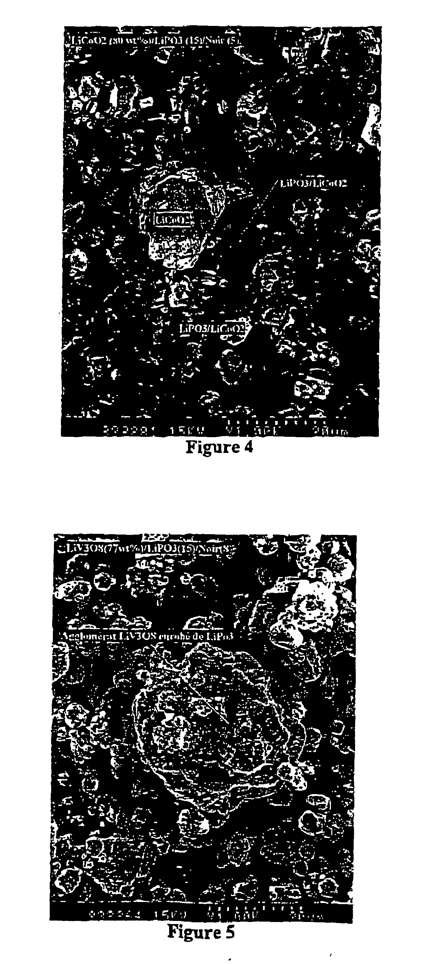

93 g d'acide polymétaphosphorique (HPO₃)ₙ sont dissous dans 6 litres d'eau, puis neutralisés par l'ajout de 49 g de LiOH•H₂O correspondant à un rapport molaire (HPO₃)ₙ /LiOH de 1. À cette solution, 491 g d'une dispersion aqueuse de noir de carbone (Ketjenblack^{™} EC-600) contenant 5 % en poids de noir de carbone est mélangée de façon énergique avec la solution aqueuse de polymétaphosphate de lithium, puis 1 kg de LiCoO₂ est ajouté pour compléter la dispersion aqueuse à atomiser ("spray drying"). Cette dispersion est séchée par atomisation dans l'air sec à l'aide d'un "spray-dryer" de marque Buchi modèle B-190™ (Brinkmann Instruments Division). Le type d'atomisation utilisé est l'atomisation par buse en courant parallèle, c'est-à-dire que le produit atomisé et l'air de dessication s'écoulent dans la même direction. La micrographie (Figure 4) de la poudre obtenue montre des particules individuelles enrobées en bonne partie de verre. L'analyse du phosphore par spectroscopie Auger montre des particules individuelles de LiCoO₂ recouvertes en bonne partie de verre ainsi que des goutelettes sphériques de (LiPO₃)ₙ et de carbone résultant des conditions non optimisées du "spray drying".

### Exemple 4

208 g d'acide polymétaphosphorique (HPO₃)ₙ sont dissous dans 8,4 litres d'eau, puis neutralisés par l'ajout de 109 g de LiOH•H₂O correspondant à un rapport molaire (HPO₃)ₙ /LiOH de l. À cette solution, 1.756 kg d'une dispersion aqueuse de noir de carbone (Ketjenblack^{™} EC-600) contenant 5% en poids de noir de carbone est mélangée de façon énergique avec la solution aqueuse de polymétaphosphate de lithium, puis 1.5 kg de LiV₃O₈ est ajouté pour compléter la dispersion aqueuse à atomiser ("spray drying"). Cette dispersion est séchée par atomisation dans l'air sec à l'aide d'un "spray-dryer" dont la procédure est décrite dans l'exemple 3 ci-haut. La micrographie (Figure 5) de la poudre obtenue montre des agglomérats de LiV₃O₈ et d'électrolyte vitreux contenant l'additif de conduction électronique. La poudre à surface stabilisée chimiquement par recouvrement d'électrolyte vitreux contient 15 % volumique (LiPO₃)ₙ, 8% de noir de carbone et 77% LiV₃O₈.

### Exemple 5

208 g d'acide polymétaphosphorique (HPO₃)ₙ sont dissous dans 8,4 litres d'eau puis neutralisé par l'ajout de 109 g de LiOH•H₂O correspondant à un rapport molaire (HPO₃)ₙ/LiOH de 1. À cette solution, 1.756 kg d'une dispersion aqueuse de noir de carbone (Ketjenblack^{™} EC-600) contenant 5 % en poids de noir de carbone est mélangée de façon énergique avec la solution aqueuse de polymétaphosphate de lithium, puis 1.5 kg de V₂O₅ est ajouté pour compléter la dispersion aqueuse à atomiser ("spray drying"). Cette dispersion est séchée par atomisation dans l'air sec à l'aide d'un "spray-dryer" dont la procédure est décrite dans l'exemple 3 ci-haut. La micrographie de la poudre obtenue montre des agglomérats de V₂O₅ et d'électrolyte vitreux contenant l'additif de conduction électronique. Ce dernier résultat est similaire à celui observé à l'exemple 4.

### Exemple 6

Dans cet exemple, on réalise une cathode composite en utilisant les particules obtenues selon l'exemple 4 pour élaborer par voie solvant et épandage à l'aide d'un gabarit en une étape une électrode composite sur un collecteur d'aluminium recouvert d'un revêtement protecteur à base de carbone et d'un liant organique inerte. On utilise cette dernière cathode composite pour la réalisation du générateur électrochimique selon les étapes suivantes.

La solution d'épandage est formée d'un copolymère d'oxyde d'éthylène de masse molaire d'environ 50 000 g/mol en solution dans l'acétonitrile à une concentration d'environ 15 % en poids et un sel de LiTFSI dans un rapport molaire O/Li de 30/l par rapport au polymère. Les particules d'agglomérats de LiV₃O₈ et d'électrolyte vitreux contenant l'additif de conduction électronique, obtenues selon l'exemple 4, sont dispersées par agitation mécanique en présence de noir de carbone (Ketjenblack™ EC600) et la suspension est enduite sur le collecteur d'aluminium recouvert d'un revêtement protecteur à base de carbone et d'un liant organique inerte. La cathode composite ainsi obtenue est séchée à 80°C durant 24 heures avant d'être assemblée avec une anode de lithium préalablement laminée avec un électrolyte polymère de 15 micron agissant comme séparateur, ce dernier étant constitué d'un copolymère d'oxyde d'éthylène contenant un sel de lithium LiTFSI à une concentration correspondant à un rapport molaire O/Li de 30/l par rapport au polymère.

Lorsque cyclée à 80°C, cette pile montre une utilisation initiale correspondant à la capacité de la cathode prévue, ce qui confirme que toute la matière active est bien accessible par l'un ou l'autre des électrolytes solides de la composite. Ce résultat confirme que ce mode de réalisation de la composite à double électrolyte solide selon l'invention permet l'accès des ions lithium au matériau actif de la cathode même si les deux électrolytes dont les conductivités ioniques sont très différentes coexistent en contact avec le matériau actif.

## Revendications

1. Un générateur électrochimique comprenant une cathode et une anode dont au moins l'une d'elle est une électrode composite, ladite électrode composite comprenant des particules d'un matériau actif, un collecteur de courant, et au moins un premier et un second électrolyte solide dans l'électrode composite, le premier et le second électrolyte comprenant optionnellement au moins un additif de conduction électronique sous forme dispersée; le premier électrolyte étant un conducteur solide de nature minérale; le second électrolyte étant solide et de nature organique, le premier électrolyte étant imperméable aux composantes du second électrolyte; une mince couche du premier électrolyte mouille et recouvre au moins une partie de la surface des particules du matériau actif de façon à protéger la surface recouverte des particules des réactions de passivation ou de dégradation et à maintenir la qualité des échanges ioniques et électroniques entre le matériau actif de l'électrode composite et les autres constituants du générateur électrochimique, les particules du matériau actif recouvertes au moins en partie par le premier électrolyte étant dispersées dans le second électrolyte solide de nature organique et le second électrolyte étant en contact avec le collecteur.

2. Un générateur selon la revendication 1 dans lequel le premier électrolyte est un conducteur des ions lithium.

3. Un générateur selon la revendication 1 de type générateur au lithium.

4. Un générateur selon la revendication 1 dans lequel le premier électrolyte est vitreux ou partiellement vitreux et conducteur des ions alcalins lithium ou potassium.

5. Un générateur selon la revendication 4 dans lequel le premier électrolyte est partiellement vitreux et comprend des phosphates ou polyphosphates de métaux alcalins ou des borates ou polyborates de métaux alcalins, ou leurs mélanges.

6. Un générateur selon la revendication 5 dans lequel le premier électrolyte comprend majoritairement du polyphosphate de lithium de formule approximative (LiPO₃)ₙ où n > 3, et possède une conductivité ionique minimale de 10⁻¹⁰ S/cm à la température d'opération.

7. Un générateur selon la revendication 6 dans lequel (LiPO₃)ₙ est soluble dans l'eau.

8. Un générateur selon la revendication 1 dans lequel le premier électrolyte contient un additif de conduction électronique sous forme dispersée et est un conducteur mixte ionique et électronique.

9. Un générateur selon la revendication 1 dans lequel le second électrolyte comprend:
- un polymère solvatant sec ou gélifié par in solvant aprotique polaire rendu conducteur par l'addition d'un sel de lithium soluble ou un polyélectrolyte; ou
- un gel comprenant un polymère peu solvatant, d'un solvant liquide aprotique polaire et d'un sel de lithium dissous

10. Un générateur selon la revendication 9 dans lequel le polymère solvatant comprend un électrolyte polymère contenant un additif de conduction électronique dispersé et est un conducteur mixte ionique et électronique.

11. Un générateur selon la revendication 1 dans lequel le matériau actif est utilisé comme cathode.

12. Un générateur selon la revendication 11 dans lequel le matériau actif comprend un oxyde de vanadium, ou un mélange d'oxydes de vanadium.

13. Un générateur selon la revendication 1 dans lequel le matériau actif est utilisé comme anode et comprend les oxydes, les nitrures, le carbone, les graphites ou leurs mélanges fonctionnant à un potentiel inférieur à 1.6 Volts par rapport à une électrode de lithium métallique.

14. Un générateur selon la revendication 1 dans lequel le collecteur de courant de l'électrode composite est recouvert d'un revêtement conducteur à base de carbone et d'un liant inerte adhérent.

15. Un générateur selon la revendication 1 dans lequel le générateur comprend un séparateur, le séparateur étant au moins un électrolyte polymère.

16. Un générateur selon la revendication 1 dans lequel l'anode comprend du lithium, un alliage de lithium, un composé d'insertion du carbone ou du graphite.

17. Procédé de fabrication d'une électrode composite telle que définie dans la revendication 1 comprenant:
a) le mélange de particules de matériau actif d'électrode dans une solution aqueuse du premier électrolyte minéral;
b) le séchage de la solution de l'étape a) pour obtenir une poudre de particule de matériau actif partiellement ou totalement recouverte du premier électrolyte minéral;
c) le mélange de la poudre obtenue en b) avec un second électrolyte organique, le premier électrolyte étant imperméable aux composantes du second électrolyte; et
d) l'enduction d'un collecteur de courant par le mélange obtenu en c).

18. Un procédé selon la revendication 17 dans lequel la solution aqueuse comprend un alcool inférieur.

19. Procédé selon la revendication 17 dans lequel le second électrolyte est déformable.

20. Procédé selon la revendication 17 dans lequel le second électrolyte comprend un électrolyte polymère sec ou gélifié.

21. Procédé selon la revendication 17 dans lequel le premier électrolyte est vitreux ou partiellement vitreux et conducteur des ions alcalins lithium ou potassium.

22. Procédé selon la revendication 21 dans lequel le premier électrolyte est partiellement vitreux et comprend des phosphates ou polyphosphates de métaux alcalins ou des borates ou polyborates de métaux alcalin ou leurs mélanges.

23. Procédé selon la revendication 17 dans lequel le premier électrolyte comprend majoritairement du polyphosphate de lithium de formule approximative (LiIPO₃)ₙ où n> 3, et possède une conductivité ionique minimale de 10⁻¹⁰ S/cm à la température d'opération.

24. Procédé selon la revendication 23 dans laquelle (LiIPO₃)ₙ est soluble dans l'eau.

25. Procédé selon la revendication 17 dans lequel le matériau actif comprend un oxyde de vanadium, ou un mélange d'oxydes de vanadium.

## Claims

1. An electrochemical generator comprising a cathode and an anode, at least one of them is a composite electrode, said composite electrode comprising particles of an active material, a current collector and at least one first and one second solid electrolyte in the composite electrode, the first and second electrolyte optionally comprising at least one electronic conduction additive in dispersed form; the first electrolyte being a solid conductor of mineral nature; the second electrolyte being solid and of organic nature, the first electrolyte being impervious to the components of the second electrolyte; a thin layer of the first electrolyte wets and covers at least one portion of the surface of the particles of the active material so as to protect the surface covered with particles from passivation or degradation reactions and maintain the quality of ion and electron exchanges between the active material of the composite electrode and the other constituents of the electrochemical generator, the particles of the active material at least partly covered by the first electrolyte being dispersed into the second solid electrolyte of organic nature and the second electrolyte being in contact with the collector.

2. A generator according to claim 1 wherein the first electrolyte is a conductor of lithium ions.

3. A generator according to claim 1 of the lithium generator type.

4. A generator according to claim 1 wherein the first electrolyte is glassy or partly glassy and conductive of lithium or potassium alkaline ions.

5. A generator according to claim 4 wherein the first electrolyte is partly glassy and comprises alkali metal phosphates or polyphosphate or alkali metal borates or polyborates or mixtures thereof.

6. A generator according to claim 5, wherein the first electrolyte comprises in majority lithium polyphosphate with the approximate formula (LiPO₃)ₙ wherein n > 3, and has a minimum ionic conductivity of 10⁻¹⁰ S/cm at the operating temperature

7. A generator according to claim 6 wherein (LiPO₃)ₙ is soluble in water.

8. A generator according to claim 1 wherein the first electrolyte contains an electronic conduction additive in dispersed form and is a mixed ionic and electronic conductor.

9. A generator according to claim 1 wherein the second electrolyte comprises:
- a dry solvating polymer or gelled by a polar aprotic solvent made conductive by adding a soluble lithium salt or a polyelectrolyte; or
- a gel comprising a not very solvating polymer, of a polar aprotic liquid solvent and of a dissolved lithium salt.

10. A generator according to claim 9 wherein the solvating polymer comprises a polymer electrolyte containing a dispersed electronic conduction additive and is a mixed ion and electronic conductor.

11. A generator according to claim 1 wherein the active material is used as a cathode.

12. A generator according to claim 11 wherein the active material comprises a vanadium oxide or a mixture of vanadium oxides.

13. A generator according to claim 1 wherein the active material is used as an anode and comprises oxides, nitrides, carbon, graphite or mixtures thereof operating at a potential of less then 1.6 volts relatively to a lithium metal electrode.

14. A generator according to claim 1 wherein the current collector of the composite electrode is covered with a conductive coating based on carbon and on an adherent inert binder.

15. A generator according to claim 1 wherein the generator comprises a separator, the separator being at least a polymeric electrolyte.

16. A generator according to claim 1 wherein the anode comprises lithium, a lithium alloy, a carbon or graphite insertion compound.

17. A process for preparing a composite electrode as defined in claim 1 comprising:
a) mixing electrode active material particles in an aqueous solution of the first mineral electrolyte;
b) drying the solution from step a) in order to obtain an active material particle powder partly or totally covered with the first mineral electrolyte;
c) mixing the powder obtained in b) with a second organic electrolyte, the first electrolyte being impervious to the components of the second electrolyte; and
d) coating a current collector with the mixture obtained in c).

18. A process according to claim 17 wherein the aqueous solution comprises a lower alcohol.

19. A process according to claim 17 wherein the second electrolyte is deformable.

20. A process according to claim 17 wherein the second electrolyte comprises a dry or gelled polymer electrolyte.

21. A process according to claim 17, wherein the first electrolyte is glassy or partly glassy and conductive of lithium or potassium alkaline ions.

22. A process according to claim 21 wherein the first electrolyte is partly glassy and comprises alkali metal phosphates or polyphosphates or alkali metal borates or polyborates or mixtures thereof.

23. A process according to claim 17 wherein the first electrolyte comprises in majority lithium polyphosphate of approximate formula (LiIPO₃)ₙ wherein n > 3, and has a minimum ion conductivity of 10¹⁰ S/cm at the operating temperature.

24. A process according to claim 23 wherein (LiIPO₃)ₙ is soluble in water.

25. A process according to claim 17 wherein the active material comprises an oxide of vanadium, or a mixture of vanadium oxides.

## Patentansprüche

1. Ein elektrochemischer Generator, der eine Kathode und eine Anode umfasst, von denen mindestens eine eine Kompositelektrode ist, wobei die Kompositelektrode Partikel eines aktiven Materials, einen Stromabnehmer und mindestens einen ersten und einen zweiten stabilen Elektrolyten in der Kompositelektrode umfasst, wobei der erste und der zweite Elektrolyt optional mindestens einen elektronisch leitenden Zusatzstoff in dispergierter Form umfasst, wobei der erste Elektrolyt ein stabiler Leiter mineralischer Natur ist, wobei der zweite Elektrolyt stabil und organischer Natur ist, wobei der erste Elektrolyt für die Bestandteile des zweiten Elektrolyten undurchlässig ist, wobei eine dünne Schicht des ersten Elektrolyten mindestens einen Teil der Oberfläche der Partikel des aktiven Materials benetzt und bedeckt, um die bedeckte Oberfläche der Partikel vor Passivierungsreaktionen bzw. Beschädigung zu schützen und die Qualität des ionischen und elektronischen Austauschs zwischen dem aktiven Material der Kompositelektrode und den anderen Bestandteilen des elektrochemischen Generators aufrechtzuerhalten, wobei die mindestens teilweise von dem ersten Elektrolyten bedeckten Partikel des aktiven Materials in dem zweiten stabilen Elektrolyten organischer Natur dispergiert sind und der zweite Elektrolyt im Kontakt mit dem Abnehmer ist.

2. Ein Generator nach Anspruch 1, wobei der erste Elektrolyt ein Lithiumionenleiter ist.

3. Ein Generator nach Anspruch 1 vom Typ Lithiumgenerator.

4. Ein Generator nach Anspruch 1, wobei der erste Elektrolyt glasartig oder teilweise glasartig und Leiter von alkalischen Lithium- oder Kaliumionen ist.

5. Ein Generator nach Anspruch 4, wobei der erste Elektrolyt teilweise glasartig ist und Phosphate oder Polyphosphate alkalischer Metalle oder Borate oder Polyborate alkalischer Metalle oder ihre Gemische umfasst.

6. Ein Generator nach Anspruch 5, wobei der erste Elektrolyt mehrheitlich Lithiumpolyphosphat der ungefähren Formel (LiPO₃)ₙ umfasst, wobei n > 3 ist, und eine minimale lonenkonduktivität von 10⁻¹⁰ S/cm bei Arbeitstemperatur besitzt.

7. Ein Generator nach Anspruch 6, wobei (LiPO₃)ₙ wasserlöslich ist.

8. Ein Generator nach Anspruch 1, wobei der erste Elektrolyt einen elektronisch leitenden Zusatzstoff in dispergierter Form enthält und ein gemischter ionischer und elektronischer Leiter ist.

9. Ein Generator nach Anspruch 1, wobei der zweite Elektrolyt umfasst:
- ein trockenes solvatisierendes oder Gel-Polymer durch ein polares aprotisches Lösungsmittel, das durch Hinzufügen eines löslichen Lithiumsalzes oder eines Polyelektrolyten leitend gemacht wurde, oder
- ein Gel, das ein schwach solvatisierendes Polymer eines polaren aprotischen flüssigen Lösungsmittels und eines gelösten Lithiumsalzes umfasst.

10. Ein Generator nach Anspruch 9, wobei das solvatisierende Polymer einen Polymerelektrolyten umfasst, der einen dispergierten elektronisch leitenden Zusatzstoff enthält und ein gemischter ionischer und elektronischer Leiter ist.

11. Ein Generator nach Anspruch 1, wobei das aktive Material als Kathode verwendet wird.

12. Ein Generator nach Anspruch 11, wobei das aktive Material ein Vanadiumoxid oder ein Gemisch von Vanadiumoxiden umfasst.

13. Ein Generator nach Anspruch 1, wobei das aktive Material als Anode verwendet wird und die Oxide, die Nitride, den Kohlenstoff, die Graphite oder ihre Gemische umfasst, die mit einem Potential von unter 1,6 Volt im Verhältnis zu einer metallischen Lithiumelektrode funktionieren.

14. Ein Generator nach Anspruch 1, wobei der Stromabnehmer der Kompositelektrode von einer leitenden Beschichtung auf der Basis von Kohlenstoff und von einem adhäsiven inerten Bindemittel bedeckt ist.

15. Ein Generator nach Anspruch 1, wobei der Generator einen Separator umfasst, wobei der Separator mindestens ein Polymerelektrolyt ist.

16. Ein Generator nach Anspruch 1, wobei die Anode Lithium, eine Lithiumlegierung, eine Kohlenstoff- oder Graphit-Interkalationsverbindung umfasst.

17. Verfahren zur Herstellung einer Kompositelektrode, wie in Anspruch 1 beschrieben, das umfasst:
a) das Mischen von Partikeln aktiven Elektrodenmaterials in einer wässrigen Lösung des ersten mineralischen Elektrolyts,
b) das Trocknen der Lösung von Schritt a), um ein Pulver aktiver Materialpartikel zu erhalten, die teilweise oder vollständig vom ersten mineralischen Elektrolyten bedeckt sind,
c) das Mischen des in b) erhaltenen Pulvers mit einem zweiten organischen Elektrolyten, wobei der erste Elektrolyt für die Bestandteile des zweiten Elektrolyten undurchlässig ist, und
d) die Beschichtung eines Stromabnehmers mit dem in c) erhaltenen Gemisch.

18. Ein Verfahren nach Anspruch 17, wobei die wässrige Lösung einen niedrigen Alkohol umfasst.

19. Verfahren nach Anspruch 17, wobei der zweite Elektrolyt deformierbar ist.

20. Verfahren nach Anspruch 17, wobei der zweite Elektrolyt einen trockenen oder Gel-Polymerelektrolyten umfasst.

21. Verfahren nach Anspruch 17, wobei der erste Elektrolyt glasartig oder teilweise glasartig ist und Leiter alkalischer Lithium- oder Kaliumionen.

22. Verfahren nach Anspruch 21, wobei der erste Elektrolyt teilweise glasartig ist und Phosphate oder Polyphosphate alkalischer Metalle oder der Borate oder Polyborate alkalischer Metalle oder ihrer Gemische umfasst.

23. Verfahren nach Anspruch 17, wobei der erste Elektrolyt mehrheitlich Lithiumpolyphosphat der ungefähren Formel (LiIPO₃)ₙ umfasst, wobei n > 3 ist, und eine minimale lonenkonduktivität von 10⁻¹⁰ S/cm bei Arbeitstemperatur besitzt.

24. Verfahren nach Anspruch 23, wobei (LiIPO₃)ₙ wasserlöslich ist.

25. Verfahren nach Anspruch 17, wobei das aktive Material ein Vanadiumoxid oder ein Gemisch aus Vanadiumoxiden umfasst.
